# EUROPÄISCHE PATENTSCHRIFT

(11) **EP 3 639 963 B1**
(45) Veröffentlichungstag und Bekanntmachung des Hinweises auf die Patenterteilung: **07.02.2024**
(21) Anmeldenummer: 19193526.1
(22) Anmeldetag: 26.08.2019
(51) Int. Cl.: B23K 11/11, B23K 11/25, G05B 13/00, B23K 101/00, B23K 101/18

(54) **VORRICHTUNG UND VERFAHREN ZUM BETREIBEN EINER WIDERSTANDSCHWEISSVORRICHTUNG**
DEVICE AND METHOD FOR OPERATING A RESISTANCE WELDING DEVICE
DISPOSITIF ET PROCÉDÉ DE FONCTIONNEMENT D'UN DISPOSITIF DE SOUDAGE PAR RÉSISTANCE

(30) Priorität: 16.10.2018 DE 102018217670
(43) Veröffentlichungstag der Anmeldung: 22.04.2020
(73) Patentinhaber: Robert Bosch GmbH, 70442 Stuttgart (DE)
(72) Erfinder: Haeufgloeckner, Juergen, 63936 Schneeberg (DE)

(56) Entgegenhaltungen:
- EP-A2- 2 246 760
- WO-A1-2006/042572
- DE-T2- 69 207 735
- DE-U1- 9 317 013
- JP-A- 2012 095 442
- JP-U- S4 737 828
- US-A- 5 552 575

## Beschreibung

Die vorliegende Erfindung betrifft eine Widerstandsschweißvorrichtung, eine Datenbank für eine Widerstandsschweißvorrichtung und ein Verfahren zum Betreiben einer Widerstandsschweißvorrichtung, sowie einen Datensatz zur Verwendung mit einer Schweißsteuerung.

### Stand der Technik

Das Widerstandsschweißen dient üblicherweise zur Herstellung einer Verbindung zwischen zwei Blechen bzw. Metallteilen. Eine Widerstandsschweißvorrichtung weist dafür zwei Schweißelektroden auf, zwischen denen ein Schweißstrom fließt. Dabei werden zum Schweißen üblicherweise Ströme von 5 kA bis einige 50 kA bei Schweißspannungen im Bereich von 1 bis 2,5 V verwendet. Bei den zu verbindenden Teilen kann es sich sowohl um Bleche gleicher als auch um Bleche unterschiedlicher Metallart und Dicke handeln. Die einzelnen Schweißvorgänge finden dabei in Zeitfenstern im Bereich von bis zu einer Sekunde statt. Es sind jedoch auch längere Zeiten möglich. Beispielsweise werden im Zuge des automatisierten Karosserierohbaus durch robotergeführte Schweißwerkzeuge unterschiedliche Werkstücke, z.B. Bleche, mittels Widerstandsschweißen miteinander verschweißt.

Aus dem Stand der Technik, zum Beispiel der Offenlegung DE 103 34 478 A1, ist eine sogenannte adaptive Schweißregelung, im Folgenden mit ASR abgekürzt, bekannt. Bei einer ASR wird in der Schweißsteuerung mithilfe der elektrischen Größen die Prozessimpedanz bestimmt und mit einer hinterlegten oder extern zugeführten Soll-Impedanz verglichen. Abhängig vom Vergleich der Impedanzen steuert ein als Prozessregler bezeichneter Regler den Schweißprozess.

Zum besseren Verständnis wird folgendes dargelegt: Die Prozessimpedanz setzt sich aus Stoffwiderständen und Kontaktwiderständen zusammen. Die Stoffwiderstände sind abhängig von dem Material und dem Zustand der Schweißelektroden, sowie von den beiden zu schweißenden Materialien. Die Kontaktwiderstände ergeben sich durch den Schweißprozess selbst, das heißt insbesondere durch die sich kontaktierenden Oberflächen, die entstehende Schweißlinse bzw. Schweißnaht und durch die Impedanz der Schweißelektroden. Die in der Schweißsteuerung oder extern hinterlegten Soll-Impedanzen werden im Folgenden als Referenzkurven bezeichnet. Die ASR nutzt den Unterschied zwischen der Referenzkurve und einer Messkurve der aktuellen Schweißung und passt den Schweißstrom und die Schweißzeit, also den Sollwertverlauf für einen Stromregler, entsprechend an.

Aus der DE 10 2006 038 768 A1 ist ein Verfahren zur Ermittlung der für einen durchzuführenden Schweißvorgang charakteristischen Referenzkurve bekannt. Die Referenzkurve wird während einer Konstant-Strom-Regelung, im Folgenden mit KSR abgekürzt, die auch als nichtadaptive Betriebsart bezeichnet wird, durch Messung während eines solchen Schweißablaufes erzeugt und ist charakteristisch für die Art der durchzuführenden aktuellen Schweißung.

Mittels Widerstandsschweißen werden, wie bereits erwähnt, im automatisierten Karosseriebau unterschiedliche Werkstücke, zum Beispiel Bleche, miteinander verschweißt.

Problematisch dabei ist, dass mehrere Fahrzeugmodelle mit unterschiedlichen Modellvarianten auf einer Fertigungslinie und mit einer Schweißsteuerung gefertigt werden. Je nachdem, wie die Fahrzeugmodelle auf dieser Linie einlaufen, werden die unterschiedlichsten Blechkombinationen geschweißt. Die Reihenfolge der Fahrzeuge ändert sich ständig. Parallel nimmt die Varianz der zu verscheißenden Blechkombinationen zu. Auch die Beschichtungen der Bleche unterscheiden sich immer mehr und die dazu notwendige Ansteuerung der Widerstandsschweißvorrichtung weicht bei unterschiedlichen Beschichtungen deutlich voneinander ab.

Im Zuge des Herstellungsprozesses einer einzigen Karosserie können bis zu mehrere tausend Schweißpunkte (z.B. ca. 5.000 Schweißpunkte für ein Mittelklasse-Fahrzeug) bei mehreren hundert verschiedenen Werkstückdicken- und/oder Materialkombinationen (z.B. ca. 700 Kombinationen für ein Mittelklasse-Fahrzeug) automatisiert bearbeitet werden. Schweißsteuerungen erhalten deshalb Prozessführungsparameter - also Sollwerte oder Sollkurven - zur Steuerung des Schweißprozesses der zu verschweißenden Punkte, in Abhängigkeit von der Werkstückdicken- und/oder Materialkombinationen des jeweiligen Schweißpunktes. Im weiteren Verlauf dieser Schrift wird für die Werkstückmaterial und/oder Werkstückdicken Materialkombination der Begriff Blech-/Dickenkombination bzw. die Abkürzung BDK verwendet.

Die Patentanmeldung DE 10 2013 218 138 A1 der Anmelderin offenbart eine Schweißvorrichtung und ein Schweißverfahren bei welchem solche Prozessführungsparameter für Schweißverbindungen in einem Speichermittel der Schweißsteuerung hinterlegt sind. Ein Datensatz für eine Schweißverbindung umfasst eine Position am Werkstück und eine Blech-/Dickenkombination (BDK). Dieser Blech-/Dickenkombination ist unabhängig von der Position am Werkstück ein weiterer Datensatz zugeordnet. Dieser weitere Datensatz umfasst Prozessführungsparameter wie eine Stromsollwertkurve, ein Kraft-/ oder Drehmomentprofil, eine Referenzkurve und eventuell weitere Referenzkurven.

Aus der Patentanmeldung DE 10 2015 225 050 A1, welche ebenfalls von der Anmelderin stammt, ist ein Verfahren zum Erstellen einer Datenbank zur Durchführung von Schweißprozessen bekannt. Es wird eine Datenbank erstellt, bei der Produktionsdaten nach gleichen BDK sortiert werden. Für jeweils gleiche BDK wird ein spezifischer Datensatz erstellt. Insbesondere umfassen die BDK spezifischen Daten Prozessführungsparameter (wie Schweißstrom, Stromzeit, Elektrodenkraft und/oder Referenzkurven).

Aus dem Recherchenbericht sind weiterhin folgende einschlägigen Dokumente aus dem Stand der Technik bekannt.

Die Druckschrift JP S47 37828 U offenbart eine Schweißvorreichtung bei der ein Windungsverhältnis eines Schweißtransformators, für jede Schweißposition in Abhängigkeit von den zwei Arten der zu verschweißenden Metallen, eingestellt wird.

Die Druckschrift DE 93 170 13 U1 offenbart ein Schweißwerkzeug zum Punktschweißen mit mehrachsigen Manipulatoren, bestehend aus einem mit der Manipulatorhand verbundenem Elektrodenhalter mit einer Schweißelektrode, wobei die Schweißelektrode im Elektrodenhalter längsbeweglich und federnd ausweichfähig gelagert ist, so dass die Schweißelektrode durch Schwingungen und Kraftspitzen weniger belastet und besser geschont wird.

Die Anmeldung JP 20120 954 42 A offenbart die Änderung der Proportionalverstärkung, der Nachstellzeit sowie der Vorhaltzeit der PID-Regelung auf der Basis einer Bestimmung von Induktivitätskoeffizienten, welche dem Induktivitätswert der Gleichstromdrossel entspechen, um die Reaktionsfähigkeit der PID-Regelung bei einem Schweißvorgangzu beschleunigen.

Die Schrift US 5 552 575 offenbart, wie eine Leistung des Schweißwerkzeugs, welches sich schnell auf einer dynamisch geplanten Trajektorien bewegt, in Echtzeit moduliert wird, um eine geregelte Wärmeeintragsverteilung im Schweißbereich und auf der Schweißmittellinie zu erzielen, was zu einer verbesserten Zugfestigkeit der Verbindung führt.

Die Schrift DE 692 07 735 T2 betrifft das Gebiet der Regelsysteme zum Schalten von Fahrzeugystemen und offenbart ein Getriebesteuerungssystem mit unterschiedlichen Systemparametern, bspw. Proportional-, Integral- und Differentialverstärkung von denen einige gemäß dem vorausgehenden Verhalten des Servomechanismus beim Schalten des Getriebes verändert werden.

Die Patentanmeldung EP 2 246 760 A2 der Anmelderin offenbart ein Verfahren zur Bestimmung wenigstens eines Reglerparameters eines Regelglieds in einem Bahnspannungs-Regelkreis für eine Bearbeitungsmaschine, wobei wenigstens ein Reglerparameter in Abhängigkeit von wenigstens einen, die Warenbahn kennzeichnenden Parameter und wenigstens einer Totzeit bestimmt wird.

Die Patentanmeldung WO 20066006042 572 A1, welche die Basis für den Oberbegriff von Anspruch 1 bildet, betrifft eine Vorrichtung zur Ausführung eines Schweißverfahrens mit Sensormitteln zum Abfühlen der Lage und/oder Lageänderungen eines Schweißkopfes relativ zu einer Bezugslage des Schweißkopfes und/oder zu den zu verschweißenden Werkstücken auf, so daß wenigstens eine Kenngröße des Scheißverfahrens in Abhängigkeit von der gefühlten Lage und/oder Lageänderung beeinflussbar ist und wird als nächstliegener Stand der Technik angesehen.

### Aufgabe

Trotz ASR mit BDK-spezifischen Stromsollkurven und Referenzkurven kann es Anwendungsfälle geben, bei denen die Qualität der Schweißpunkte nicht stabil ist. Dies trifft insbesondere auf das Verschweißen von Aluminium Blechkombinationen mit variierenden Blechdicken zu, weil aufgrund der hohen spezifischen Leitfähigkeit von Aluminiumlegierungen die Wärmeumsetzung sehr gering und der Nebenschlusseinfluss groß ist. Problematisch ist auch das Verschweißen von Blechkombinationen aus verzinkten Stahl.

Es ist daher Aufgabe der vorliegenden Erfindung, eine Schweißsteuerung und ein Verfahren zum Steuern eines Schweißvorgangs bereitzustellen, mit welchen der Schweißprozess weiter verbessert werden kann. Insbesondere sollen eine Schweißsteuerung und ein Verfahren zum Steuern eines Schweißvorgangs bereitgestellt werden, bei welchen beim Schweißen mit einem Schweißwerkzeug für bisher als schwierig geltende Schweißverbindungen, eine konstantere Schweißqualität erzielt wird.

### Offenbarung der Erfindung

Diese Aufgabe wird durch eine Widerstandsschweißvorrichtung mit einer Schweißsteuerung zur Ansteuerung eines Schweißwerkzeugs nach Anspruch 1 gelöst. Die Aufgabe wird zudem durch eine Datenbank für eine Widerstandsschweißvorrichtung nach Anspruch 10, ein Verfahren zum Betreiben einer Widerstandsvorrichtung nach Anspruch 15, und einen Datensatz mit den Merkmalen des Anspruchs 20 gelöst.

Der Erfindung liegt die Erkenntnis zugrunde, dass durch schweißpunktspezifisches Einstellen der Parameter der Regler der Schweißsteuerung die Schweißqualität und die Wiederholbarkeit einer Schweißung unter anderem bei schwierig geltenden Schweißverbindungen deutlich verbessert werden kann. Im Unterschied zu einem Prozessführungsparameter, wie einem Stromsollwert oder einer Referenzkurve, ist hier ein Reglerparameter gemeint wie z.B. die Verstärkung des Proportionalanteils K_{P} oder die Nachstellzeit T_{N} des Integralanteils eines PI-Reglers. Bei Schweißsteuerungen regelt ein Stromregler der Schweißsteuerung für die Schweißung eines Punktes einen vorgegebenen Schweißstrom. Der Sollwert wird einem Datensatz eines Speichermittels der Schweißsteuerung oder einer externen Datenbank entnommen und dem Stromregler als zeitlicher Sollwertverlauf durch eine spezielle Einrichtung der Schweißsteuerung zugeführt. Diese Einrichtung der Schweißsteuerung wird hier als Zuordnungseinrichtung bezeichnet.

Der Zuordnungseinrichtung wird erfindungsgemäß eine Parametrisierungseinrichtung hinzugefügt. Wird der Datensatz um besagte Parameter für den Stromregler ergänzt, kann die Parametrisierungseinrichtung die Parameter - also die Reglerparameter - des Stromreglers optimal an die zu verschweißende BDK anpassen. Der Schweißprozess kann weiter verbessert werden. Die Anpassung der Parameter für den Stromregler kann auf sehr effiziente Weise durch die ohnehin in einer Schweißsteuerung vorhandene Zuordnungseinrichtung erfolgen. Dafür müssen die Daten des Datensatzes für die BDK der zu verschweißenden Verbindung nur um spezielle Reglerparameter für den Stromregler ergänzt werden. Somit können zum Beispiel auf einfache Art und Weise die Reglerparameter Proportionalverstärkung K_{P} und/oder die Nachstellzeit T_{N}, aber auch weitere hier nicht explizit genannte Reglerparameter des Stromreglers optimal an die spezifische BDK angepasst werden. Damit ist es einfach und sehr effizient möglich, für jede zu verschweißende Blech-/Dickenkombination die optimale Einstellung und Parametrisierung des Stromreglers vorzunehmen. Der Ausschuss der Fertigungsanlage aufgrund von fehlerhaften Schweißverbindungen wird reduziert. Ferner wird eine verbesserte Regelung des Schweißprozesses ermöglicht, ohne dass zusätzliche Hardware benötigt wird, insbesondere ohne zusätzliche Sensoren.

Diese Vorteile ergeben sich in analoger Weise auch aus der Bereitstellung einer Datenbank mit den Merkmalen des Anspruchs 10, aus der Bereitstellung eines Verfahrens mit den Merkmalen des Anspruchs 15 und aus der Bereitstellung eines Datensatzes mit den Merkmalen des Anspruchs 20.

Vorteilhafte weitere Ausgestaltungen werden in den abhängigen Ansprüchen angegeben.

Besonders vorteilhaft ist es die Korrekturparameter eines Prozessreglers der Schweißsteuerung an die unterschiedlichen BDK anzupassen. Unter Korrekturparameter werden hier die Reglerparameter des Prozessreglers verstanden. Auf einfache Art und Weise ist es mit der vorliegenden Erfindung möglich auch die Korrekturparameter des Prozessreglers an die zu verschweißende Blech-/Dickenkombination anzupassen. Dazu werden die Daten des Datensatzes für die BDK der zu verschweißenden Verbindung um Daten ergänzt, die einen oder mehrere Korrekturparameter des Prozessreglers individuell für diese spezifische BDK angeben. Beispielsweise können mit Hilfe der Korrekturparameter eine Anpassung von Schweißstrom und Schweißzeit gesteuert werden, als Reaktion des Prozessreglers auf eine Abweichung einer erfassen Größe - wie Strom - und der entsprechenden Referenzkurve. Die Schweißprozessregelung und dessen Parametrierung wird somit in Abhängigkeit von der zu verschweißenden BDK durchgeführt und nicht ausschließlich von einem Vergleich von Ist- und Referenzkurve. Dadurch kann der Schweißprozess weiter erheblich verbessert werden. Auf einfache und effiziente Weise ist es möglich die Korrekturparameter des Prozessreglers wie zum Beispiel die Verstärkung, also wie stark der Strom bei einer Prozessabweichung verstellt wird, und/oder die Verstärkung der Stromzeitverlängerung, also wie stark die Zeitdauer des Stromflusses bei einer Prozessabweichung verstellt wird, und/oder die Grenze der Stromverstellung, aber auch weitere hier nicht explizit genannte Korrekturparameter des Prozessreglers an die spezifische BDK anzupassen. Beispielsweise erfordert das Schweißen von Blechkombinationen aus verzinkten Stahl einen wesentlich kleineren Eingriff des Prozessreglers den Schweißstrom und die Schweißzeit betreffend als das Verschweißen von Blechkombinationen von unverzinkten Stahlblechen. Hier kann der Prozessregler höhere Ströme mit längerer Zeitdauer als Sollwerte an den Stromregler vorgeben. Auch ist der Durchmesser der Schweißpunkte bei verzinktem Stahlblechen kleiner, als bei unverzinkten Blechen, was zu einem erhöhten Verschleiß der Schweißelektroden führt. Der höhere Energieeintrag sowie das kleinere Toleranzband als auch der höhere Verschleiß der Elektroden erfordern eine höhere Leistung der Stromquelle, sowie einen exakten Abgleich der Regelungsparameter für eine dynamische Regelung. Dadurch kann auch z.B. der thermische und mechanische Stress der Elektroden reduziert werden. Die Parametrisierungseinrichtung der Schweißsteuerung stellt für jeden Schweißablauf die optimalen Korrekturparameter des Prozessreglers speziell für die aktuell zu verschweißende Blech-/Dicken-Kombination ein. Grundlage für dieses Vorgehen ist ein in der Datenbank hinterlegtes Wissen bzgl. des notwendigen Schweißprozesses in Bezug auf die Korrekturparameter des Prozessreglers. Erfindungsgemäß stellt nämlich die Datenbank bzw. ein darin abgelegter Datensatz eine Struktur z.B. in Form von vorgesehenen Tabellen bzw. Feldern zur Aufnahme von Werten bereit, in der das besagte Wissen in Form von -insbesondere für die jeweilige BDK angepassten - Korrekturparametern hinterlegt ist. Insbesondere können durch die Anpassung der Parameter des Prozessreglers an die BDK Schweißspritzer verhindert werden.

Neuere bzw. hochwertige Schweißsteuerungen umfassen einen Antriebsregler, insbesondere einen Kraft-/Drehmomentregler für das Schweißwerkzeug, z.B. für den Schließantrieb einer Schweißzange. Wird der Datensatz der BDK um Reglerparameter für den Kraft-/Drehmomentregler ergänzt, lässt sich der Kraft-/Drehmomentregler spezifisch an die zu verschweißende BDK anpassen. Durch eine bessere Dosierung der Anpresskraft, wird einer Verformung des Schweißwerkzeugs entgegengewirkt und die Schweißelektroden können exakt positioniert werden. Der Schweißprozess wird weiter verbessert. Somit können zum Beispiel auf einfache Art und Weise die Parameter Verstärkung K_{P} und/oder Nachstellzeit T_{N} des Kraft-/Drehmomentreglers, aber auch weitere hier nicht explizit genannte Parameter des Kraft-/Drehmomentreglers optimal an die spezifische BDK angepasst werden. Damit ist es einfach und sehr effizient möglich, für jede zu verschweißende Blech-/Dickenkombination die optimale Einstellung des Kraft-/Drehmomentreglers vorzunehmen. Problematisch sind insbesondere Randschweißungen. Bei einer derartigen Randschweißung "rutschen" die Elektroden mit dem Aufschmelzen langsam seitlich von dem Werkstück herunter. Dies hat einen kontinuierlichen Kraftverlust zur Folge. Der Elektrodenantrieb regelt die Kraft ständig nach, es kommt zu Überschwingern bei der Regelung. Wenn man für Randschweißungen eigens angelegte BDK und entsprechende Datensätze für diese BDK vorsieht, können vorteilhaft und effizient die Reglerparameter des Kraft-/ oder Drehmomentreglers an diese schwierigen Schweißprozesse angepasst werden. Denkbar ist es insbesondere die Position des Schweißpunktes am Werkstück in die Parameterauswahl für den Kraft-/Drehmomentregler einzubeziehen. Damit kann die Qualität des Schweißprozesses bei Randschweißungen verbessert werden.

### Ausführungsbeispiele

Weitere Vorteile und Ausführungsformen ergeben sich aus den beigefügten Figuren:
Darin zeigen:
- Fig. 1: schematisch eine bevorzugte Ausgestaltung einer erfindungsgemäßen Schweißvorrichtung,
- Fig. 2: eine graphische Darstellung einer bevorzugten Ausgestaltung einer erfindungsgemäßen Datenbankstruktur und
- Fig. 3: schematisch eine bevorzugte Ausführungsform des erfindungsgemäßen Verfahrens als ein Blockdiagramm.

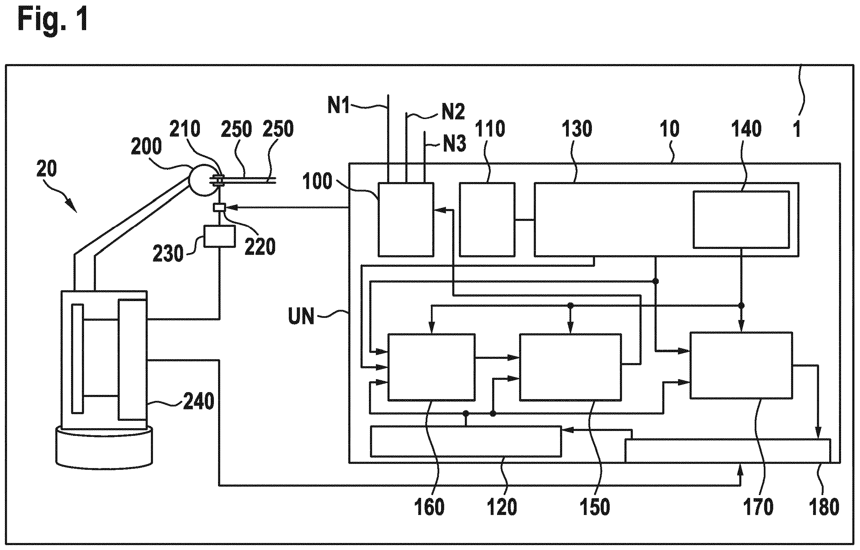

In Fig. 1 ist schematisch eine Widerstandsschweißvorrichtung 1 dargestellt. Die Widerstandsschweißvorrichtung 1 umfasst eine Schweißsteuerung 10 und einen Schweißroboter 20.

Die Schweißsteuerung 10 umfasst einen Umrichter 100, ein Speichermittel 110, eine Erfassungseinrichtung 120, eine Zuordnungseinrichtung 130 mit einer Parametrisierungseinrichtung 140, einen Stromregler 150 und einen Prozessregler 160, einen Kraft-/Drehmomentregler 170 sowie eine Kommunikationseinrichtung 180.

Der Schweißroboter 20 führt ein Schweißwerkzeug 200, das dazu dient die Schweißverbindung durch einen Stromfluss an den zu verbindenden Blechen 250, zum Beispiel einer Autokarosserie stoffschlüssig zu fügen. Das Schweißwerkzeug 200 umfasst zwei Schweißelektroden 210 mit hier nicht dargestellten Elektrodenkappen. Das Schweißwerkzeug 200 ist als C-Schweißzange ausgeführt, kann jedoch auch eine X-Zange oder ein anderes Schweißwerkzeug sein. Weiterhin umfasst der Schweißroboter 20 einen Schweißtransformator 220, eine Messeinrichtung 230 und eine Kommunikationseinrichtung 240. Mit der Messeinrichtung 230 wird der der Stromfluss durch die Schweißelektroden 210, die Spannung an den Schweißelektroden 210, die Kraft, die die Schweißelektroden 210 auf die Bleche 250 ausüben und/oder die Position der Schweißelektroden 210 gemessen. Mit der Kommunikationseinrichtung 240 werden die Daten der Messeinrichtung 230 über die Kommunikationseinrichtung 180 an die Erfassungseinrichtung 120 der Schweißsteuerung 10 übertragen. Die Übertragung kann analog als auch digital zum Beispiel über einen Feldbus oder auch drahtlos erfolgen.

Der Umrichter 100 der Schweißsteuerung 10 wandelt die dreiphasige Netzspannung von der Netzfrequenz in eine Spannung einer Mittelfrequenz, die den Schweißtransformator 220 des Schweißroboters 20 speist. Der Schweißtransformator 220 stellt den Schweißstrom, der über die Schweißelektroden 210 und über die nicht dargestellten Elektrodenkappen durch die zu verbindenden Bleche 250 fließt zur Verfügung und dient als Gleichrichter sowie steuerbare Stromquelle. Die Höhe des Schweißstromes wird dabei durch den Stromregler 150 der Schweißsteuerung 10 geregelt, der seinerseits den Umrichter 100 ansteuert. Als Sollwert für den Stromregler 150 der Schweißsteuerung 10 dient eine Sollwertkurve. Die Zuordnungseinrichtung 130 liest aus einem Datensatz des Speichermittels 110 oder aus einer nicht dargestellten externen Datenbank eine Liste der zu verschweißenden Punkte aus. Anschließend liest die Zuordnungseinrichtung 130 aus der Liste der zu verscheißenden Punkte per Referenzierung einen Datensatz für die BDK des aktuellen zu verschweißenden Punktes aus. Der ausgelesene Datensatz für die BDK umfasst ein Datenfeld für die Sollwertkurve für den Stromregler 150. Die Sollwertkurve für den Stromregler 150 ist z.B. aus Segmenten konstanten Stromverlaufs zusammengesetzt, die durch linear steigende oder fallende Übergangssegmente verbunden sind und wird durch die Höhe der Ströme mit konstanten Verlauf und durch die Steigungen der Übergangssegmente beschrieben. Die Sollwertkurve für den Stromverlauf kann auch aus Wertepaaren, bestehend aus Zeitwerten und Stromwerten die durch einen zusätzlichen, nicht dargestellten Interpolator linear interpoliert werden oder aus einer beliebigen Kombination von linearen Segmenten mit Übergangssegmenten und Wertepaaren aus Zeit-/ und Stromwerten zusammengesetzt sein.

Die Sollwertkurve für den Stromregler 150 wird von der Zuordnungseinrichtung 130 abgerufen und während des Schweißvorganges dem Prozessregler 160 an seinem oberen Eingang als Stromsollwertkurve zugeführt. In der nichtadaptiven Betriebsart KSR des Prozessreglers 160, wird diese Sollwertkurve unverändert an den Stromregler 150 weitergegeben.

In der adaptiven Betriebsart ASR des Prozessreglers 160 wird der Unterschied der aktuellen Messkurve, die von der Erfassungseinrichtung 120 dem Prozessregler 160 an seinem unteren Eingang zugeführt wird, zu einer Referenzkurve, die von der Zuordnungseinrichtung 130 dem Prozessregler 160 an seinem mittleren Eingang zugeführt wird, bewertet und der Sollwertverlauf für den Stromregler 150 wird entsprechend der Prozessabweichung angepasst. Die Stellgröße des Prozessreglers 160 dient also dem Stromregler 150 als zeitlicher Verlauf des Stromsollwerts. Die Stellgröße des Stromreglers 150 ist ein Signal, insbesondere ein pulsweitenmoduliertes Signal, das dem Umrichter 100 zugeführt wird. Der Umrichter 100 steuert den Schweißtransformator 220 mit einem Wechselstrom auf seiner Primärseite an. Sekundärseitig ist der Schweißtransformator 220 mit der Schweißzange bzw. dem Schweißwerkzeug 200 am Schweißroboter 20 verbunden. Die Messeinrichtung 230 des Schweißroboters 20 misst den elektrischen Strom, der durch die Schweißelektroden 210 des Schweißwerkzeugs 200 fließt und überträgt diese Werte über die Kommunikationseinrichtungen 180 und 240 an die Erfassungseinrichtung 120. Der Istwert für den Stromregler 150 wird von der Erfassungseinrichtung 120 dem Stromregler 150 zugeführt. Der Stromregler 150 hat Reglerparameter wie eine an den Schweißtransformator 220 angepasste Verstärkung K_{P} und/oder eine Nachstellzeit T_{N}. Der von der Zuordnungseinrichtung 130 ausgelesene Datensatz umfasst auch diese Reglerparameter des Stromreglers 150. Die Parameter werden von der Parametrisierungseinrichtung 140 der Zuordnungseinrichtung 130 dem Stromregler 150 vor der aktuellen Schweißung als aktuelle Reglerparameter zugewiesen. Damit ist es in vorteilhafter Weise möglich, nicht nur die Sollwertkurve für den Stromregler 150, sondern auch die Reglerparameter für den Stromregler 150 an eine BDK des aktuellen Schweißpunktes mit einer vorteilhaften Einstellung des oder der Reglerparameter des Stromreglers 150, anzupassen. Der Stromregler 150 kann weitere, hier nicht explizit aufgeführte Reglerparameter haben. Der von der Zuordnungseinrichtung 130 ausgelesene Datensatz umfasst auch diese Reglerparameter und die Parametrisierungseinrichtung 140 weist sie dem Stromregler 150 vor der aktuellen Schweißung zu.

Ein dem Stromregler 150 übergeordneter Prozessregler 160 korrigiert den, dem Stromregler 150 zuführten Sollwert und kann Abweichungen in der Schweißpunktqualität durch Anpassung des Schweißprozesses ausgleichen. Der von der Zuordnungseinrichtung 130 ausgelesene Datensatz umfasst dafür zumindest eine Referenzkurve. Die besagte Referenzkurve dient dem Prozessregler 160 als Sollwert. Die Referenzkurve kann eine während einer sogenannten Referenzschweißung aufgenommene Kurve des Impedanz-Verlaufes an der Schweißstelle sein. Zusätzlich oder alternativ kann die Referenzkurve auch der Verlauf einer auf die Schweißelektroden 210 ausgeübten Kraft und/oder die Position der Schweißelektroden 210 während dieser Referenzschweißung sein. Dabei stellen die Messsignale die Kraft- bzw. die Wegänderungen dar, die der Schweißprozess auf die Schweißelektroden 210, durch die thermische Ausdehnung des Schweißgutes und dem Einsinken der Schweißelektroden 210 in das aufgeschmolzene Schweißgut der Bleche 250 bewirkt. Der Istwert für den Prozessregler 160 wird von der Erfassungseinrichtung 120 erfasst und dem Prozessregler 160 zugeführt. Dieser Istwert kann der Impedanz-Verlauf an der Schweißstelle und/oder die auf die Schweißelektroden 210 ausgeübte Kraft und/oder die Position der Schweißelektroden 210 während der aktuellen Schweißung sein. Der Prozessregler 160 hat Korrekturparameter wie die Verstärkung der Stromsollwertkorrektur I_{P}, die Verstärkung der Stromzeitverlängerung I_{T}, und/oder die Grenze der Stromverstellung I_{G}. Der von der Zuordnungseinrichtung 130 ausgelesene Datensatz umfasst auch Datenfelder für die Korrekturparameter des Prozessreglers 160. Diese in diesen Datenfeldern vorgehaltenen Werte werden dem Prozessregler 160 von der Parametrisierungseinrichtung 140 vor der aktuellen Schweißung als Korrekturparameter zugewiesen. Damit ist es in vorteilhafter Weise möglich, nicht nur die Sollwertkurven und/oder die Referenzkurven für den Prozessregler 160, sondern auch die Korrekturparameter des Prozessreglers 160 mit einer vorteilhaften Einstellung an eine BDK anzupassen. Der Prozessregler 160 kann weitere, hier nicht explizit aufgeführte Korrekturparameter aufweisen. Der von der Zuordnungseinrichtung 130 ausgelesene Datensatz umfasst auch diese Korrekturparameter und die Parametrisierungseinrichtung 140 weist sie dem Prozessregler 160 vor der aktuellen Schweißung zu.

Ein weiterer Regler der Schweißsteuerung 10, ein Kraft-/oder Drehmomentregler 170 regelt die Kraft, die die Schweißelektroden 210 über ihre nicht dargestellten Elektrodenkappen auf die Bleche 250 ausüben. Dazu steuert der Regler 170 einen nicht dargestellten elektrischen Antrieb des Schweißwerkzeugs 22 an. Beim Kraft-/oder Drehmomentregler 170 kann es sich auch um einen Antriebsregler in einer Kraft-/ oder Drehmomentregelungsbetriebsart handeln. Der von der Zuordnungseinrichtung 130 ausgelesene Datensatz umfasst weiterhin eine Sollwertkurve für den Kraft- oder Drehmomentregler 170. Die Sollwertkurve dient dem Kraft- oder Drehmomentregler 170 als zeitlicher Verlauf des Kraft- oder Drehmomentsollwerts. Die Sollwertkurve für den Kraft-/oder Drehmomentregler 170 ist z.B. aus Segmenten konstanten Kraft-/oder Drehmomentverlaufs zusammengesetzt, die durch linear steigende oder fallende Übergangssegmente verbunden sind und wird durch die Höhe der Kräfte oder Drehmomente mit konstanten Verlauf und durch die Steigungen der Übergangssegmente beschrieben. Die Sollwertkurve für den Kraft-/Drehmomentverlauf kann auch durch Wertepaare, bestehend aus Zeitwerten und Kraft-/oder Drehmomentwerten, die durch einen zusätzlichen, nicht dargestellten Interpolator linear interpoliert werden, oder aus einer beliebigen Kombination von linearen Segmenten mit Übergangssegmenten und Wertepaaren aus Zeit-/ und Kraft-/oder Drehmomentwerten zusammengesetzt sein. Die Messeinrichtung 230 des Schweißwerkzeugs 200 misst die Kraft, die die Schweißelektroden 210 auf die Bleche 250 ausüben und überträgt diese Werte über die Kommunikationseinrichtungen 180, 240 an die Erfassungseinrichtung 120 der Schweißsteuerung 10. Der Istwert für den Kraft- oder Drehmomentregler 170 wird von der Erfassungseinrichtung 120 dem Kraft- oder Drehmomentregler 170 zugeführt. Der Kraft- oder Drehmomentregler 170 hat Reglerparameter wie eine Verstärkung K_{P} oder eine Nachstellzeit T_{N}. Der von der Zuordnungseinrichtung 130 ausgelesene Datensatz umfasst auch Reglerparameter des Kraft-/oder Drehmomentreglers 170. Diese Werte der entsprechenden Datenfelder des Datensatzes werden von der Parametrisierungseinrichtung 140 dem Kraft-/oder Drehmomentregler 170 vor der aktuellen Schweißung als Reglerparameter zugewiesen. Damit ist es in vorteilhafter Weise möglich, nicht nur die Sollwertkurven für den Kraft-/oder Drehmomentregler 170, sondern auch die Reglerparameter für den Kraft-/oder Drehmomentregler 170 mit einer vorteilhaften Einstellung der Reglerparameter an eine BDK anzupassen. Der Kraft-/oder Drehmomentregler 170 kann weitere, hier nicht explizit aufgeführte Reglerparameter haben. Der von der Zuordnungseinrichtung 130 ausgelesene Datensatz umfasst auch diese Reglerparameter und die Parametrisierungseinrichtung 140 weist sie dem Kraft-/oder Drehmomentregler 170 vor der aktuellen Schweißung zu.

Der Widerstandsschweißprozess besteht im Wesentlichen aus drei Phasen. Diese drei Phasen werden üblicherweise als Vorhaltezeit, Stromflussphase und Nachhaltezeit oder Abkühlphase bezeichnet.

In der ersten Phase, der sogenannten Vorhaltezeit, drücken die zwei Schweißelektroden 210 die zu verbindenden Bleche 250 bzw. Metallteile unter Einwirkung einer Kraft, welche durch den Antrieb des Schweißwerkzeugs 200 bereitgestellt wird, zusammen. Dabei fließt in dieser Phase noch kein Strom zwischen den Schweißelektroden 210.

In der zweiten Phase, der Stromflussphase, werden die Bleche 250 durch einen Stromfluss zwischen den Schweißelektroden 210 aufgeheizt und es bildet sich an den Verbindungsstellen durch die vom Strom erzeugte Wärme eine Schmelze aus.

Die dritte und letzte Phase des Widerstandsschweißprozesses ist die Nachhaltezeit bzw. Abkühlphase. In dieser Phase kühlt die Schmelze ab und erstarrt, so dass sich eine unlösbare Verbindung zwischen den Blechen 250 bzw. Metallteilen bildet. Erst nachdem die Schmelze genügend abgekühlt und insbesondere, erstarrt ist, werden die Schweißelektroden 210 durch den Antrieb des Schweißwerkzeugs wieder geöffnet und die nun verbundenen Bleche 250 können aus der Schweißvorrichtung entnommen werden.

Mit Hilfe der drei Regler, Stromregler 150, Prozessregler 160 und Kraft-/oder Drehmomentregler 170 steuert die Schweißsteuerung 10 den erforderlichen Ablauf zum Schließen und Öffnen des Schweißwerkzeugs 200, die über die Schweißelektroden 210 auf die Bleche 250 aufgebrachte Kraft, die Stromzeit, die Stromhöhe und gegebenenfalls den zeitlichen Stromverlauf.

Durch die vorliegende Erfindung erfolgt in allen drei Phasen des Widerstandsschweißprozesses eine optimale Anpassung der Regler 150, 160, 170, der Schweißsteuerung an die jeweilige konkrete Blech-/Dickenkombination der zu verschweißenden Bleche 250 mit eigens für diese BDK hinterlegten Reglerparametern und Korrekturparametern. Damit kann der Widerstandsschweißprozess in Bezug auf die zeitliche Dauer und die erforderliche Prozessstabilität erheblich verbessert werden.

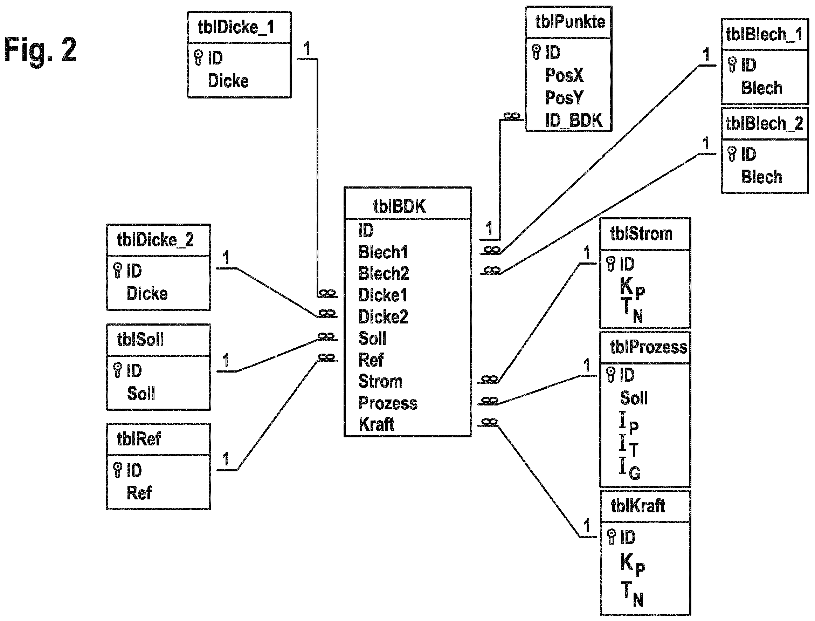

Die Fig. 2 zeigt die graphische Darstellung einer erfindungsgemäßen Datenbankstruktur.

In der Figur sind die Tabellen, die Datenfelder der Tabellen und die Beziehungen zwischen den Tabellen einer relationalen Datenbank dargestellt.

Die Tabelle tblPunkte enthält Datensätze mit den zu verschweißenden Punkten. Jedem Datensatz ist eine Position am Werkstück zugeordnet. Weiterhin referenziert der Datensatz über eine 1 :n-Beziehung einen Datensatz der Tabelle tblBDK in der Daten über die angelegten und mit Sollkurven und Referenzkurven versehenen Blech-/Dickenkombinationen abgelegt sind. Dieser Datensatz der Tabelle tblBDK referenziert über weitere 1:n Beziehungen Datensätze in den Tabellen tbl_Blech, tblDicke, tblSoll, tbIRef, tblStrom, tblProzess und tbl Kraft.

Die Tabelle tblBlech beschreibt die Materialien der zu verschweißenden Bleche 250 und die Tabelle tblDicke beschreibt deren Dicke. Werden zum Beispiel zwei Aluminiumbleche mit den Blechdicken 2 und 5 mm verschweißt, referenzieren das Datenfeld Blech1 und das Datenfeld Blech2 den Datensatz für das Material Aluminium der Tabelle tblBlech. Weiter referenziert das Datenfeld Dicke1 einen Datensatz 2 mm der Tabelle tblDicke und das Datenfeld Dicke2 referenziert den Datensatz für eine Blechstärke von 5 mm der Tabelle tblDicke. Damit ist die Blech-/Dickenkombination der zu verschweißenden Materialien eindeutig beschrieben.

Die Datensätze der Tabelle tblSoll, beschreiben Sollwertvorgaben z.B. eine StromSollwertkurve für den Stromregler 150, die Datensätze der Tabelle tblRef beschreiben Referenzkurven für den Prozessregler 160. Die Tabelle tblSoll kann auch Sollwertvorgaben für einen Kraft/-Drehmomentregler 170 für die Schließbewegung des Schweißwerkzeugs 200 beschreiben. Ein Datensatz der jeweiligen Tabelle wird über die Datenfelder Soll bzw. Ref des Datensatzes der Tabelle tblBDK referenziert.

Erfindungsgemäß referenzieren die weiteren Datenfelder Strom, Prozess und Kraft der Tabelle tbIBDK die Reglerparameter für den Stromregler 150, Korrekturparameter für den Prozessregler 160 und Reglerparameter für den Kraft-/oder Drehmomentregler 170. Mit Hilfe der Werte der Datenfelder der genannten drei Tabellen werden die Regler- bzw. Korrekturparameter der jeweiligen Regler angepasst. Der Abruf der Werte durch die Zuordnungseinrichtung 130 bzw. die Parametrisierungseinrichtung 140 erfolgt mit Hilfe der dem zu verschweißenden Punkt zugeordneten BDK und der darin enthaltenen Referenz auf die Datenfelder der Tabellen tblStrom, tblProzess und tblKraft, wie in Fig. 2 dargestellt. Somit ist es in vorteilhafter Weise möglich nicht nur die Sollwertkurven für den Stromregler 150 und/oder Kraftregler 170, die Referenzkurven für den Prozessregler 160, sondern auch die Regler- bzw. Korrekturparameter für den Stromregler 150, den Prozessregler 160 und/oder den Kraft-/Drehmomentregler 170 an eine BDK anzupassen, mit einer für die jeweilige BDK vorteilhaften Einstellung der Parameter des genannten Reglers.

Denkbar ist es auch, die Parameter für den Stromregler 150 entsprechend des verwendeten Schweißtransformators 220 einzustellen. Bei einem Wechsel des Schweißtransformators 220 kann ein anderer Reglerparametersatz für den Stromregler 150 eingestellt sein. Dazu kann ein zusätzliches, hier nicht dargestelltes Datenfeld TrafoTyp in die Tabelle tblBDK aufgenommen werden, wobei entsprechend dem darin referenzierten Schweißtransformator die vorgenannten Werte der Tabelle tblStrom für die BDK in an den Schweißtransformator angepassten Varianten vorgehalten werden.

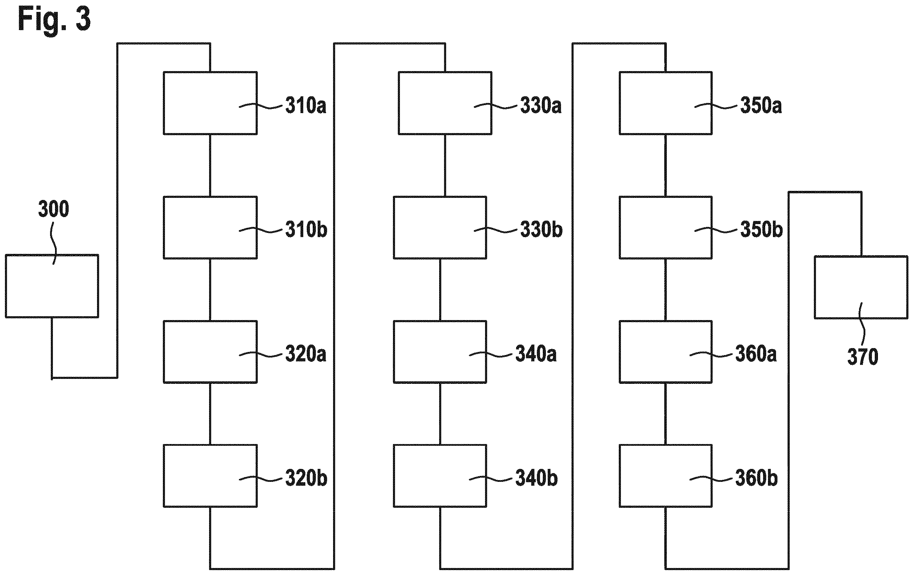

Die Fig. 3. zeigt einen Programmablaufplan der Verfahrensschritte.

In einem ersten Schritt 300 des Verfahrens erfolgt das Auslesen des aktuellen zu verschweißenden Punktes aus der Liste der zu verschweißenden Punkte durch die Zuordnungseinrichtung 130. Dem aktuellen zu verschweißenden Punkt ist eine BDK und damit ein Datensatz eindeutig zugeordnet.

Im Schritt 310a des Verfahrens wird die Sollwertkurve für den Stromregler 150 aus dem Datensatz ausgelesen.

Im Schritt 310b des Verfahrens werden die Reglerparameter für den Stromregler aus dem Datensatz ausgelesen.

Im Schritt 320a des Verfahrens wird die Sollwertkurve an den Stromregler 150 zugewiesen.

Im Schritt 320b werden die Reglerparameter für den Stromregler 150 parametrisiert.

Im Schritt 330a des Verfahrens wird die Referenzkurve für den Prozessregler aus dem Datensatz ausgelesen.

Im Schritt 330b werden die Korrekturparameter für den Prozessregler 160 aus dem Datensatz ausgelesen.

Im Schritt 340a des Verfahrens wird die Referenzkurve an den Prozessregler 160 zugewiesen. Im Schritt 340b des Verfahrens werden die Korrekturparameter für den Prozessregler 160 parametrisiert.

Im Schritt 350a des Verfahrens wird die Sollwertkurve für den Kraft-/Drehmomentregler aus dem Datensatz ausgelesen.

Im Schritt 350b werden die Parameter für den Kraft-/Drehmomentregler 170 aus dem Datensatz ausgelesen.

Im Schritt 360a des Verfahrens wird die Sollwertkurve an den Kraft-/Drehmomentregler 170 zugewiesen.

Im Schritt 360b des Verfahrens werden die Parameter für den Kraft-/Drehmomentregler 170 parametrisiert.

Im Schritt 370 des Verfahrens sind die Regelung des zeitlichen Verlaufs des elektrischen Stromes an der Schweißstelle, das Erfassen des zeitlichen Verlaufs des Stroms, einer Spannung, einer Kraft und/oder einer Position an der Schweißstelle mit der Erfassungseinrichtung 120, die Korrektur der Sollwertkurve des Stromreglers 150 durch den Prozessregler 160 und die Regelung des zeitlichen Verlaufs der Kraft an der Schweißstelle durch den Kraft- /oder Drehmomentregler 170 zusammengefasst.

Das vorliegende Verfahren bietet sich daher besonders vorteilhafterweise für Prozesse an, bei welchem eine Vielzahl von Schweißpunkten mit komplexen, verschiedenen Blechdickenkombinationen BDK miteinander zu verschweißen sind. Beispielsweise eignet sich das Verfahren besonders vorteilhaft für den Karosserierohbau, insbesondere für automatisierte Schweißprozesse im Karosserierohbau, vorzugsweise im Zuge einer Kraftfahrzeugproduktion.

Weitere mögliche Implementierungen der Erfindung umfassen auch nicht explizit genannte Kombinationen von zuvor beschriebenen Merkmalen oder Ausführungsformen. Dabei wird der Fachmann auch Einzelaspekte als Verbesserungen oder Ergänzungen zu der jeweiligen Grundform der Erfindung hinzufügen. Die Erfindung ist in den Ansprüchen beschrieben.

### Bezugszeichenliste

- 1: Widerstandsschweißvorrichtung

- 10: Schweißsteuerung
- 100: Umrichter
- 110: Speichermittel
- 120: Erfassungseinrichtung
- 130: Zuordnungseinrichtung
- 140: Parametrisierungseinrichtung
- 150: Stromregler
- 160: Prozessregler
- 170: Kraft-/ Drehmomentregler
- 180: Kommunikationseinrichtung

- 20: Schweißroboter
- 200: Schweißwerkzeug
- 210: Schweißelektroden
- 220: Schweißtransformator
- 230: Messeinrichtung
- 240: Kommunikationseinrichtung
- 250: Bleche

- tblPunkte: Tabelle der zu verschweißenden Schweißpunkte
ID Primärschlüssel
PosX X-Position am Werkstück
PosY Y-Position am Werkstück
ID_BDK Fremdschlüssel auf Datensatz der Tabelle tblBDK
- tblBlech: Tabelle der Blechmaterialien
ID Primärschlüssel
Blech Material
- tblDicke: Tabelle der Blechdicken
ID Primärschlüssel
Dicke Blechdicke
- tblSoll: Tabelle der Sollwerte
ID Primärschlüssel
Soll Beschreibung des Sollwert-Verlaufs, z.B. Sollstromkurve
- tblRef: Tabelle der Referenzkurven
ID Primärschlüssel
Soll Beschreibung des Referenzkurven-Verlaufs
- tblStrom: Tabelle der Reglerparameter des Stromreglers
ID Primärschlüssel
K_{P} Verstärkung für den Proportionalanteil
T_{N} Nachstellzeit für den Integralanteil
- tblProzess: Tabelle der Korrekturparameter des Prozessreglers
ID Primärschlüssel
I_{P} Verstärkung der Stromsollwertkorrektur
I_{T} Verstärkung der Stromzeitverlängerung
I_{G} Grenze der Stromverstellung
- tblKraft: Tabelle der Reglerparameter des Kraft-/Drehmomentreglers
ID Primärschlüssel
K_{P} Verstärkung für den Proportionalanteil
T_{N} Nachstellzeit für den Integralanteil
- tblBDK: Tabelle der Bleck-Dickenkombination
ID Primärschlüssel
Blech1 erster Fremdschlüssel auf Datensatz der Tabelle tblBlech
Blech2 zweiter Fremdschlüssel auf Datensatz der Tabelle tblBlech
Dicke1 erster Fremdschlüssel auf Datensatz der Tabelle tblDicke
Dicke2 zweiter Fremdschlüssel auf Datensatz der Tabelle tblDicke
Soll Fremdschlüssel auf Datensatz der Tabelle tblSoll
Ref Fremdschlüssel auf Datensatz der Tabelle tblRef
Strom Fremdschlüssel auf Datensatz der Tabelle tblStrom
Prozess Fremdschlüssel auf Datensatz der Tabelle tblProzess
Kraft Fremdschlüssel auf Datensatz der Tabelle tblKraft

## Patentansprüche

1. Widerstandsschweißvorrichtung mit einer Schweißsteuerung (10) zur Ansteuerung eines Schweißwerkzeugs (200),
wobei die Schweißsteuerung (10)
• eine Zuordnungseinrichtung (130) und
• einen ersten Regler (150) umfasst,
und die Zuordnungseinrichtung (130) dazu eingerichtet ist, einen aktuellen zu verschweißenden Punkt aus einer Liste von zu verschweißenden Punkten auszulesen, eine erste Sollwertkurve aus einem dem aktuellen zu verschweißenden Punkt zugeordneten Datensatz einer Datenbank auszulesen und dem ersten Regler (150) die erste Sollwertkurve zuzuordnen und
der erste Regler (150) dazu eingerichtet ist, mittels wenigstens eines ersten Reglerparameters einen zeitlichen Verlauf eines elektrischen Stromes am aktuellen zu verschweißenden Punkt gemäß der ersten Sollwertkurve zu regeln,
**dadurch gekennzeichnet, dass**
der Datensatz (tblBDK, tblStrom) in der Datenbank wenigsten einen ersten Wert (tblStrom:K_{P}, tblStrom:T_{N}) für den ersten Reglerparameter aufweist und die Zuordnungseinrichtung (130) eine Parametrisierungseinrichtung (140) aufweist, die dazu eingerichtet ist, aus dem Datensatz des aktuell zu verschweißenden Punktes den ersten Wert auszulesen und mit dem ersten Wert den ersten Reglerparameter des ersten Reglers (150) zu parametrisieren.

2. Widerstandsschweißvorrichtung nach Anspruch 1, **dadurch gekennzeichnet, dass** der erste Regler (150) der Schweißsteuerung (10) ein Stromregler ist.

3. Widerstandschweißvorrichtung nach Anspruch 2, **dadurch gekennzeichnet, dass** der wenigstens erste Reglerparameter wenigstens eine Proportionalverstärkung des Stromreglers oder eine Nachstellzeit des Stromreglers ist.

4. Widerstandsschweißvorrichtung nach einem der vorhergehenden Ansprüche,
wobei die Schweißsteuerung (10)
• eine Erfassungseinrichtung (120) und
• und einen zweiten Regler (160) umfasst,
wobei die Erfassungseinrichtung (120) dazu eingerichtet ist, einen zeitlichen Verlauf eines Stroms, einer Spannung, einer Kraft und/oder einer Position beim Schweißen eines Punktes zu erfassen,
die Zuordnungseinrichtung (130) dazu eingerichtet ist, aus dem den aktuellen zu verschweißenden Punkt zugeordneten Datensatz der Datenbank wenigstens eine erste Referenzkurve auszulesen und dem zweiten Regler (160) die Referenzkurve zuzuordnen, und der zweite Regler (160) mittels wenigstens eines ersten Korrekturparameters dazu eingerichtet ist, die von der Zuordnungseinrichtung (130) dem ersten Regler (150) zugeführte Sollwertkurve auf Basis von Abweichungen zwischen der Referenzkurve und dem von der Erfassungseinrichtung (120) erfassten zeitlichen Verlauf des Stroms, der Spannung, der Kraft und/oder der Position zu korrigieren,
**dadurch gekennzeichnet, dass**
der Datensatz (tblBDK, tblProzess) in der Datenbank wenigstens einen zweiten Wert (tblProzess:I_{P}, tblProzess:I_{T}, tblProzess:I_{G}) für den ersten Korrekturparameter aufweist, und dass die Parametrisierungseinrichtung (140) dazu eingerichtet ist, mit dem zweiten Wert den ersten Korrekturparameter des zweiten Reglers (160) zu parametrisieren.

5. Widerstandsschweißvorrichtung nach Anspruch 4, **dadurch gekennzeichnet, dass** der zweite Regler (160) der Schweißsteuerung (10) ein Prozessregler ist.

6. Widerstandsschweißvorrichtung nach Anspruch 5, **dadurch gekennzeichnet, dass** der wenigstens erste Korrekturparameter wenigstens eine Verstärkung der Stromregelung des Prozessreglers, eine Grenze der Stromverstellung des Prozessreglers oder eine Verstärkung der Stromzeitverlängerung des Prozessreglers (160) ist.

7. Widerstandsschweißvorrichtung nach einem der vorhergehenden Ansprüche, wobei die Schweißsteuerung (10) einen dritten Regler (170) zur Steuerung eines Antriebs des Schweißwerkzeugs umfasst und die Zuordnungseinrichtung (130) dazu eingerichtet ist aus dem Datensatz der Datenbank eine zweite Sollwertkurve auszulesen und dem dritten Regler (170) die zweite Sollwertkurve zuzuordnen und
der dritte Regler (170) mittels wenigstens eines zweiten Reglerparameters dazu eingerichtet ist,
durch den Antrieb des Schweißwerkzeugs (200) einen zeitlichen Verlauf einer Kraft oder eines Drehmoments für den aktuellen zu verschweißenden Punkt gemäß der zweiten Sollwertkurve zu regeln,
**dadurch gekennzeichnet, dass**
der Datensatz (tblBDK, tblKraft) wenigstens einen dritten Wert (tblKraft:K_{P}, tblKraft:T_{N}) für den zweiten Reglerparameter aufweist, und dass die Parametrisierungseinrichtung (140) dazu eingerichtet ist, mit dem dritten Wert den zweiten Reglerparameter des dritten Reglers (170) zu parametrisieren.

8. Widerstandsschweißvorrichtung nach Anspruch 7, **dadurch gekennzeichnet, dass** der dritte Regler (170) der Schweißsteuerung (10) ein Regler eines elektrischen Antriebs des Schweißwerkzeugs, mit einer Kraftregelungsbetriebsart oder einer Drehmomentregelungsbetriebsart ist.

9. Widerstandsschweißvorrichtung nach Anspruch 8, **dadurch gekennzeichnet, dass** der wenigstens zweite Reglerparameter des dritten Reglers (170) wenigstens eine Proportionalverstärkung oder eine Nachstellzeit des Kraftreglers oder des Drehmomentreglers des Antriebsreglers des elektrischen Antriebs des Schweißwerkzeugs (200) ist.

10. Datenbank für eine Widerstandsschweißvorrichtung nach einem der Ansprüche 1 bis 9 mit wenigstens einem Datensatz (tbIBDK), welcher insbesondere einen Primärschlüssel (tblBDK, ID) für eine Blech-/Dickenkombination besitzt und über diesen Primärschlüssel einem Schweißpunkt zuordenbar ist, wobei dem Datensatz wenigstens eine Sollwertkurve (tblSoll, Soll) für den ersten Regler (150) der Schweißsteuerung (10) zugeordnet ist,
**dadurch gekennzeichnet,**
**dass** dem Datensatz (tbIBdK) wenigstens ein erster Wert (tblStrom:K_{P}, tblStrom:T_{N}) für den ersten Reglerparameter des ersten Reglers (150) der Schweißsteuerung (10) zugeordnet ist, wobei insbesondere der erste Wert wenigstens eine Proportionalverstärkung oder eine Nachstellzeit eines Stromreglers darstellt.

11. Datenbank nach Anspruch 10 für eine Widerstandsschweißvorrichtung nach einem der Ansprüche 4 bis 6, wobei dem Datensatz (tblBDK) wenigstens eine Referenzkurve (tblRef:Ref) für den zweiten Regler (160) der Schweißsteuerung (10) zugeordnet ist,
**dadurch gekennzeichnet,**
**dass** dem Datensatz (tblBDK) wenigstens ein zweiter Wert (tblProzess:I_{P}, tblProzess:I_{T}, tblProzess:I_{G}) für den ersten Korrekturparameter des zweiten Reglers (160) der Schweißsteuerung (10) zugeordnet ist, wobei insbesondere der zweite Wert wenigstens eine Verstärkung der Stromregelung, eine Verstärkung der Stromzeitverlängerung oder eine Grenze der Stromverstellung eines Prozessreglers ist.

12. Datenbank nach einem der Ansprüche 10 oder 11 für eine Widerstandsschweißvorrichtung nach einem der Ansprüche 7 bis 9 und wobei dem Datensatz (tblBDK) wenigstens eine zweite Sollwertkurve (tblSoll:Soll) für den dritten Regler (170) der Schweißsteuerung (10) zugeordnet ist,
**dadurch gekennzeichnet,**
**dass** dem Datensatz (tblBDK) wenigstens ein dritter Wert (tblKraft:K_{P}, tblKraft:T_{N}) für einen zweiten Reglerparameter des dritten Reglers (170) der Schweißsteuerung (10) zugeordnet ist, wobei insbesondere der dritte Wert wenigstens eine Proportionalverstärkung oder eine Nachstellzeit eines Kraftreglers oder eines Drehmomentreglers darstellt.

13. Datenbank nach einem der Ansprüche 10 bis 12 für eine Widerstandsschweißvorrichtung nach einem der Ansprüche 1 bis 9, **dadurch gekennzeichnet, dass** die Datenbank in einem Speichermittel (110) der Schweißsteuerung (10) vorgehalten wird.

14. Datenbank nach einem der Ansprüche 10 bis 12 für eine Widerstandsschweißvorrichtung nach einem der Ansprüche 1 bis 9, **dadurch gekennzeichnet, dass** die Datenbank auf einem Server vorgehalten wird, auf den die Schweißsteuerung (10) zugreift.

15. Verfahren zum Betreiben einer Widerstandsschweißvorrichtung nach einem der Ansprüche 1 bis 9 mit einer Datenbank nach einem der Ansprüche 10 bis 14 mit den Schritten
• Auslesen (300) eines aktuellen zu verschweißenden Punktes aus einer Liste von zu verschweißenden Punkten durch die Zuordnungseinrichtung (130),
• Auslesen (310a) einer ersten Sollwertkurve aus einem, dem aktuellen zu verschweißenden Punkt zugeordneten Datensatz der Datenbank durch die Zuordnungseinrichtung (130),
• Zuordnen (320a) der ersten Sollwertkurve an den ersten Regler (150) durch die Zuordnungseinrichtung (130) und
• Regelung (370) des zeitlichen Verlaufes eines elektrischen Stromes gemäß der ersten Sollwertkurve durch den ersten Regler (150)
**dadurch gekennzeichnet, dass**
vor dem Schritt
• Regelung (370) des zeitlichen Verlaufes des elektrischen Stromes die Schritte
• Auslesen (310b) wenigstens eines ersten Wertes aus dem Datensatz durch die Parametrisierungseinrichtung (140),
• Parametrisierung (320b) wenigstens eines ersten Reglerparameters des ersten Reglers (150) mit dem ersten Wert Parametrisierungseinrichtung (140) ausgeführt werden.

16. Verfahren nach Anspruch 15 zum Betreiben einer Widerstandsschweißvorrichtung nach einem der Ansprüche 4 bis 9
wobei vor dem Schritt
• Regelung (370) des zeitlichen Verlaufes des elektrischen Stromes
die Schritte
• Auslesen (330a) mindestens einer ersten Referenzkurve aus dem Datensatz durch die Zuordnungseinrichtung (130) und
• Zuordnen (340a) der ersten Referenzkurve an den zweiten Regler (160) durch die Zuordnungseinrichtung (130)
ausgeführt werden und wobei während des Schritts
• Regelung (370) des zeitlichen Verlaufes des elektrischen Stromes
die Schritte
• Erfassen (370) des zeitlichen Verlaufs eines Stroms, einer Spannung, einer Kraft und/oder einer Position mit der Erfassungseinrichtung (120) und
• Korrektur (370) der Sollwertkurve des ersten Reglers (150) auf Basis von Abweichungen zwischen der Referenzkurve und dem von der Erfassungseinrichtung (120) erfassten zeitlichen Verlauf des Stroms, der Spannung, der Kraft und/oder der Position durch den zweiten Regler (160) mittels wenigstens eines ersten Korrekturparameters
ausgeführt werden
**dadurch gekennzeichnet,**
**dass** vor dem Schritt
• Regelung (370) des zeitlichen Verlaufes des elektrischen Stromes die Schritte
• (330b) Auslesen wenigstens eines zweiten Wertes aus dem Datensatz durch die Zuordnungseinrichtung (130),
• Parametrisierung (340b) wenigstens eines ersten Korrekturparameters des zweiten Reglers (160) mit dem zweiten Wert durch die Parametrisierungseinrichtung (140) ausgeführt werden.

17. Verfahren nach Anspruch 15 oder Anspruch 16 zum Betreiben einer Widerstandsschweißvorrichtung nach einem der Ansprüche 7 bis 9 wobei vor dem Schritt
• (370) Regelung des zeitlichen Verlaufes des elektrischen Stromes die Schritte
• Auslesen (350a) einer zweiten Sollwertkurve aus dem Datensatz durch die Zuordnungseinrichtung (130),
• Zuordnen (360a) der zweiten Sollwertkurve an den dritten Regler (170) durch die Zuordnungseinrichtung (130) ausgeführt werden und wobei während des Schritts
• Regelung (370) des zeitlichen Verlaufs des elektrischen Stromes ein Schritt
• Regelung (370) eines zeitlichen Verlaufs einer Kraft oder eines Drehmoments des Antriebs des Schweißwerkzeugs durch den dritten Regler (170) mittels wenigstens eines zweiten Reglerparameters ausgeführt wird,
**dadurch gekennzeichnet, dass**
vor dem Schritt
• Regelung (370) eines zeitlichen Verlaufs einer Kraft oder eines Drehmoments die Schritte
• Auslesen (350b) wenigstens eines dritten Wertes aus dem Datensatz durch die Zuordnungseinrichtung (130),
• Parametrisierung (360b) wenigstens eines zweiten Reglerparameters des dritten Reglers (170) mit dem dritten Wert durch die Parametrisierungseinrichtung (140) ausgeführt werden.

18. Computerprogramm, das eine Widerstandsschweißvorrichtung (1) nach einem der Ansprüche 1 bis 9 veranlasst, ein Verfahren nach einem der Ansprüche 15 bis 17 durchzuführen, wenn es auf der Schweißsteuerung (10) der Widerstandsschweißvorrichtung (1) ausgeführt wird.

19. Maschinenlesbares Speichermedium mit einem darauf gespeicherten Computerprogramm nach Anspruch 18.

20. Datensatz zur Verwendung mit einer Schweißsteuerung (10) nach einem der Ansprüche 1 bis 9 und/oder zum Vorhalten in einer Datenbank nach einem der Ansprüche 10 bis 14 einer Schweißsteuerung (10), mit einer Struktur die folgendes vorsieht:
• einen Primärschlüssel (tblBDK:ID), welcher die Zuordnung des Datensatzes zu einem Schweißpunkt aus einer Liste von Schweißpunkten (tbIPunkte) erlaubt, insbesondere dargestellt durch eine spezifische Identifikation einer Blech- /Dickenkombination (ID_BDK),
• eine Sollwertkurve (tblSoll:Soll) zur Beaufschlagung wenigstens eines Stromreglers (150) der Schweißsteuerung (10), und
• wenigstens einen zusätzlichen Wert (tblStrom:K_{P}, tblStrom:T_{N}, tblProzess:I_{P}, tblProzess:I_{T}, tblProzess:I_{G}), bestimmt für die Parametrierung eines Stromreglers (150) der Schweißsteuerung (10) und/oder bestimmt für die Parametrierung eines Prozessreglers (160) der Schweißsteuerung (10).

## Claims

1. Resistance welding apparatus having a welding controller (10) for controlling a welding tool (200), wherein the welding controller (10) comprises
• an assignment device (130) and
• a first regulator (150),
and the assignment device (130) is configured to read a present point to be welded from a list of points to be welded, to read a first setpoint curve from a data set in a database that is assigned to the present point to be welded and to assign the first setpoint curve to the first regulator (150), and the first regulator (150) is configured to regulate a temporal profile of an electrical current at the present point to be welded according to the first setpoint curve by means of at least one first regulator parameter,
**characterized in that**
the data set (tblBDK, tblStrom) in the database has at least one first value (tblStrom:K_{P}, tblStrom:T_{N}) for the first regulator parameter, and the assignment device (130) has a parameterization device (140) which is configured to read the first value from the data set for the point to be currently welded and to parameterize the first regulator parameter of the first regulator (150) using the first value.

2. Resistance welding apparatus according to Claim 1, **characterized in that** the first regulator (150) of the welding controller (10) is a current regulator.

3. Resistance welding apparatus according to Claim 2, **characterized in that** the at least first regulator parameter is at least a proportional gain of the current regulator or a reset time of the current regulator.

4. Resistance welding apparatus according to one of the preceding claims,
wherein the welding controller (10) comprises
• a capture device (120) and
• a second regulator (160),
wherein the capture device (120) is configured to capture a temporal profile of a current, a voltage, a force and/or a position when welding a point,
the assignment device (130) is configured to read at least one first reference curve from the data set in the database that is assigned to the present point to be welded and to assign the reference curve to the second regulator (160),
and the second regulator (160) is configured to use at least one first correction parameter to correct the setpoint curve supplied to the first regulator (150) by the assignment device (130) on the basis of discrepancies between the reference curve and the temporal profile of the current, the voltage, the force and/or the position that is captured by the capture device (120), **characterized in that**
the data set (tblBDK, tblProzess) in the database has at least one second value (tblProzess:I_{P}, tblProzess:I_{T}, tblProzess:I_{G}) for the first correction parameter, and **in that** the parameterization device (140) is configured to parameterize the first correction parameter of the second regulator (160) using the second value.

5. Resistance welding apparatus according to Claim 4, **characterized in that** the second regulator (160) of the welding controller (10) is a process regulator.

6. Resistance welding apparatus according to Claim 5, **characterized in that** the at least first correction parameter is at least a gain of the current regulation by the process regulator, a limit of the current adjustment by the process regulator or a gain of the current time extension by the process regulator (160).

7. Resistance welding apparatus according to one of the preceding claims, wherein the welding controller (10) comprises a third regulator (170) for controlling a drive of the welding tool, and the assignment device (130) is configured to read a second setpoint curve from the data set in the database and to assign the second setpoint curve to the third regulator (170), and the third regulator (170) is configured to use at least one second regulator parameter
to regulate a temporal profile of a force or a torque for the present point to be welded according to the second setpoint curve by means of the drive of the welding tool (200),
**characterized in that**
the data set (tblBDK, tblKraft) has at least one third value (tblKraft:K_{P}, tblKraft:T_{N}) for the second regulator parameter, and **in that** the parameterization device (140) is configured to parameterize the second regulator parameter of the third regulator (170) using the third value.

8. Resistance welding apparatus according to Claim 7, **characterized in that** the third regulator (170) of the welding controller (10) is a regulator of an electrical drive of the welding tool, having a force regulating operating mode or a torque regulating operating mode.

9. Resistance welding apparatus according to Claim 8, **characterized in that** the at least second regulator parameter of the third regulator (170) is at least a proportional gain or a reset time of the force regulator or of the torque regulator of the drive regulator of the electrical drive of the welding tool (200).

10. Database for a resistance welding apparatus according to one of Claims 1 to 9, having at least one data set (tblBDK) which has, in particular, a primary key (tblBDK, ID) for a sheet metal/thickness combination and can be assigned to a welding point via this primary key, wherein at least one setpoint curve (tblSoll, Soll) for the first regulator (150) of the welding controller (10) is assigned to the data set,
**characterized**
**in that** at least one first value (tblStrom:K_{P}, tblStrom:T_{N}) for the first regulator parameter of the first regulator (150) of the welding controller (10) is assigned to the data set (tblBdK), wherein the first value, in particular, represents at least a proportional gain or a reset time of a current regulator.

11. Database according to Claim 10 for a resistance welding apparatus according to one of Claims 4 to 6, wherein at least one reference curve (tblRef:Ref) for the second regulator (160) of the welding controller (10) is assigned to the data set (tblBDK),
**characterized**
**in that** at least one second value (tblProzess:I_{P}, tblProzess:I_{T}, tblProzess:I_{G}) for the first correction parameter of the second regulator (160) of the welding controller (10) is assigned to the data set (tblBDK), wherein the second value, in particular, is at least a gain of the current regulation, a gain of the current time extension or a limit of the current adjustment by a process regulator.

12. Database according to either of Claims 10 and 11 for a resistance welding apparatus according to one of Claims 7 to 9, wherein at least one second setpoint curve (tblSoll:Soll) for the third regulator (170) of the welding controller (10) is assigned to the data set (tblBDK),
**characterized**
**in that** at least one third value (tblKraft:K_{P}, tblKraft:T_{N}) for a second regulator parameter of the third regulator (170) of the welding controller (10) is assigned to the data set (tblBDK), wherein the third value, in particular, represents at least a proportional gain or a reset time of a force regulator or a torque regulator.

13. Database according to one of Claims 10 to 12 for a resistance welding apparatus according to one of Claims 1 to 9, **characterized in that** the database is held in a storage means (110) of the welding controller (10).

14. Database according to one of Claims 10 to 12 for a resistance welding apparatus according to one of Claims 1 to 9, **characterized in that** the database is held on a server which is accessed by the welding controller (10).

15. Method for operating a resistance welding apparatus according to one of Claims 1 to 9 with a database according to one of Claims 10 to 14, having the steps of
• using the assignment device (130) to read (300) a present point to be welded from a list of points to be welded,
• using the assignment device (130) to read (310a) a first setpoint curve from a data set in the database that is assigned to the present point to be welded,
• using the assignment device (130) to assign (320a) the first setpoint curve to the first regulator (150), and
• using the first regulator (150) to regulate (370) the temporal profile of an electrical current according to the first setpoint curve,
**characterized in that**
before the step of
• regulating (370) the temporal profile of the electrical current,
the steps of
• using the parameterization device (140) to read (310b) at least one first value from the data set,
• using the parameterization device (140) to parameterize (320b) at least one first regulator parameter of the first regulator (150) using the first value
are carried out.

16. Method according to Claim 15 for operating a resistance welding apparatus according to one of Claims 4 to 9,
wherein, before the step of
• regulating (370) the temporal profile of the electrical current,
the steps of
• using the assignment device (130) to read (330a) at least one first reference curve from the data set and
• using the assignment device (130) to assign (340a) the first reference curve to the second regulator (160) are carried out, and wherein, during the step of
• regulating (370) the temporal profile of the electrical current,
the steps of
• using the capture device (120) to capture (370) the temporal profile of a current, voltage, a force and/or a position and
• using the second regulator (160) to correct (370) the setpoint curve of the first regulator (150) on the basis of discrepancies between the reference curve and the temporal profile of the current, the voltage, the force and/or the position that is captured by the capture device (120) by means of at least one first correction parameter
are carried out,
**characterized**
**in that**, before the step of
• regulating (370) the temporal profile of the electrical current,
the steps of
• using the assignment device (130) to read (330b) at least one second value from the data set,
• using the parameterization device (140) to parameterize (340b) at least one first correction parameter of the second regulator (160) using the second value
are carried out.

17. Method according to Claim 15 or Claim 16 for operating a resistance welding apparatus according to one of Claims 7 to 9, wherein, before the step of
• regulating (370) the temporal profile of the electrical current,
the steps of
• using the assignment device (130) to read (350a) a second setpoint curve from the data set,
• using the assignment device (130) to assign (360a) the second setpoint curve to the third regulator (170) are carried out, and wherein, during the step of
• regulating (370) the temporal profile of the electrical current,
a step of
• using the third regulator (170) to regulate (370) a temporal profile of a force or a torque of the drive of the welding tool using at least one second regulator parameter
is carried out,
**characterized in that**
before the step of
• regulating (370) a temporal profile of a force or a torque,
the steps of
• using the assignment device (130) to read (350b) at least one third value from the data set,
• using the parameterization device (140) to parameterize (360b) at least one second regulator parameter of the third regulator (170) using the third value
are carried out.

18. Computer program which causes a resistance welding apparatus (1) according to one of Claims 1 to 9 to carry out a method according to one of Claims 15 to 17 when it is executed on the welding controller (10) of the resistance welding apparatus (1).

19. Machine-readable storage medium with a computer program according to Claim 18 stored thereon.

20. Data set for use with a welding controller (10) according to one of Claims 1 to 9 and/or for holding in a database according to one of Claims 10 to 14 of a welding controller (10), having a structure which provides the following:
• a primary key (tblBDK:ID) which allows the data set to be assigned to a welding point from a list of welding points (tblPunkte), in particular represented by a specific identification of a sheet metal/thickness combination (ID_BDK),
• a setpoint curve (tblSoll:Soll) for application to at least one current regulator (150) of the welding controller (10), and
• at least one additional value (tblStrom:K_{P}, tblStrom:T_{N}, tblProzess:I_{P}, tblProzess:I_{T}, tblProzess:I_{G}) intended for parameterizing a current regulator (150) of the welding controller (10) and/or intended for parameterizing a process regulator (160) of the welding controller (10).

## Revendications

1. Dispositif de soudage par résistance comprenant une commande de soudage (10) destinée à commander un outil de soudage (200),
dans lequel la commande de soudage (10) comprend
• un dispositif d'association (130) et
• un premier régulateur (150),
et le dispositif d'association (130) est conçu pour lire un point à souder actuel dans une liste de points à souder, pour lire une première courbe de valeurs de consigne dans un ensemble de données d'une base de données, lequel est associé au point à souder actuel, et pour associer la première courbe de valeurs de consigne au premier régulateur (150), et le premier régulateur (150) est conçu pour réguler, au moyen d'au moins un premier paramètre de régulateur, une variation dans le temps d'un courant électrique au point à souder actuel conformément à la première courbe de valeurs de consigne, **caractérisé en ce que**
l'ensemble de données (tblBDK, tblStrom) comporte dans la base de données au moins une première valeur (tblStrom:K_{P}, tblStrom:T_{N}) pour le premier paramètre de régulation et le dispositif d'association (130) comporte un dispositif de paramétrage (140) qui est conçu pour lire la première valeur dans l'ensemble de données du point à souder actuel et pour paramétrer avec la première valeur le premier paramètre de régulation du premier régulateur (150).

2. Dispositif de soudage par résistance selon la revendication 1, **caractérisé en ce que** le premier régulateur (150) de la commande de soudage (10) est un régulateur de courant.

3. Dispositif de soudage par résistance selon la revendication 2, **caractérisé en ce que** ledit au moins premier paramètre de régulation est au moins un gain proportionnel du régulateur de courant ou un temps de compensation du régulateur de courant.

4. Dispositif de soudage par résistance selon l'une quelconque des revendications précédentes,
dans lequel la commande de soudage (10) comprend
• un dispositif de détection (120) et
• un deuxième régulateur (160),
dans lequel le dispositif de détection (120) est conçu pour détecter une variation dans le temps d'un courant, d'une tension, d'une force et/ou d'une position lors du soudage d'un point,
le dispositif d'association (130) est conçu pour lire au moins une première courbe de référence dans l'ensemble de données de la base de données, lequel est associé au point actuel à souder, et pour associer la courbe de référence au deuxième régulateur (160),
et le deuxième régulateur (160) est conçu pour corriger, au moyen d'au moins un premier paramètre de correction, la courbe de valeurs de consigne envoyée par le dispositif d'association (130) au premier régulateur (150) sur la base des écarts entre la courbe de référence, et la variation dans le temps, détectée par le dispositif de détection (120), du courant, de la tension, de la force et/ou de la position,
**caractérisé en ce que**
l'ensemble de données (tblBDK, tblProzess) contenu dans la base de données comporte au moins une deuxième valeur (tblProzess:I_{P}, tblProzess:I_{T}, tblProzess:I_{G}) pour le premier paramètre de correction, et **en ce que** le dispositif de paramétrage (140) est conçu pour paramétrer avec la deuxième valeur le premier paramètre de correction du deuxième régulateur (160).

5. Dispositif de soudage par résistance selon la revendication 4, **caractérisé en ce que** le deuxième régulateur (160) de la commande de soudage (10) est un régulateur de processus.

6. Dispositif de soudage par résistance selon la revendication 5, **caractérisé en ce que** ledit au moins premier paramètre de correction est au moins un gain de la régulation de courant du régulateur de processus, une limite du réglage de courant du régulateur de processus ou un gain de la prolongation du temps de courant du régulateur de processus (160).

7. Dispositif de soudage par résistance selon l'une quelconque des revendications précédentes, dans lequel la commande de soudage (10) comprend un troisième régulateur (170) destiné à commander un entraînement de l'outil de soudage, et le dispositif d'association (130) est conçu pour lire une deuxième courbe de valeurs de consigne dans l'ensemble de données de la base de données et pour associer la deuxième courbe de valeurs de consigne au troisième régulateur (170), et le troisième régulateur (170) est conçu, au moyen d'au moins un deuxième paramètre de régulation, pour
réguler, par l'intermédiaire de l'entraînement de l'outil de soudage (200), une variation dans le temps d'une force ou d'un couple destiné au point à souder actuel, conformément à la deuxième courbe de valeurs de consigne, **caractérisé en ce que**
l'ensemble de données (tblBDK, tblKraft) comporte au moins une troisième valeur (tblKraft:K_{P}, tblKraft:T_{N}) pour le deuxième paramètre de régulation, et **en ce que** le dispositif de paramétrage (140) est conçu pour paramétrer avec la troisième valeur le deuxième paramètre de régulation du troisième régulateur (170).

8. Dispositif de soudage par résistance selon la revendication 7, **caractérisé en ce que** le troisième régulateur (170) de la commande de soudage (10) est un régulateur d'un entraînement électrique de l'outil de soudage, ayant un mode de fonctionnement de régulation de force ou un mode de fonctionnement de régulation de couple.

9. Dispositif de soudage par résistance selon la revendication 8, **caractérisé en ce que** ledit au moins un deuxième paramètre de régulation du troisième régulateur (170) est au moins un gain proportionnel ou un temps de compensation du régulateur de force ou du régulateur de couple du régulateur d'entraînement de l'entraînement électrique de l'outil de soudage (200).

10. Base de données destinée à un dispositif de soudage par résistance selon l'une quelconque des revendications 1 à 9, comprenant au moins un ensemble de données (tblBDK) qui possède notamment une clé primaire (tblBDK, ID) pour une combinaison tôle/épaisseur et qui peut être associé à un point de soudage par l'intermédiaire de ladite clé primaire, dans laquelle au moins une courbe de valeurs de consigne (tblSoll, Soll) destinée au premier régulateur (150) de la commande de soudage (10) est associée à l'ensemble de données,
**caractérisée**
**en ce qu'**au moins une première valeur (tblStrom:K_{P}, tblStrom:T_{N}) destinée au premier paramètre de régulation du premier régulateur (150) de la commande de soudage (10) est associée à l'ensemble de données (tblBdK), dans laquelle la première valeur représente notamment au moins un gain proportionnel ou un temps de compensation d'un régulateur de courant.

11. Base de données selon la revendication 10 destinée à un dispositif de soudage par résistance selon l'une quelconque des revendications 4 à 6, dans laquelle au moins une courbe de référence (tblRef:Ref) destinée au deuxième régulateur (160) de la commande de soudage (10) est associée à l'ensemble de données (tblBDK),
**caractérisée**
**en ce qu'**au moins une deuxième valeur (tblProzess:I_{P}, tblProzess:I_{T}, tblProzess:I_{G}) est associée à l'ensemble de données (tblBDK) pour le premier paramètre de correction du deuxième régulateur (160) de la commande de soudage (10), dans laquelle la deuxième valeur est notamment au moins un gain de la régulation de courant, un gain de la prolongation du temps de courant ou une limite du réglage de courant d'un régulateur de processus.

12. Base de données selon l'une quelconque des revendications 10 ou 11 destinée à un dispositif de soudage par résistance selon l'une quelconque des revendications 7 à 9 et dans laquelle au moins une deuxième courbe de valeurs de consigne (tblSoll:Soll) est associée à l'ensemble de données (tblBDK) destiné au troisième régulateur (170) de la commande de soudage (10),
**caractérisée**
**en ce qu'**au moins une troisième valeur (tblKraft:K_{P}, tblKraft:T_{N}) est associée à l'ensemble de données (tblBDK) destiné au troisième régulateur (170) de la commande de soudage (10), dans laquelle la troisième valeur représente notamment au moins un gain proportionnel ou un temps de compensation d'un régulateur de force ou d'un régulateur de couple.

13. Base de données selon l'une quelconque des revendications 10 à 12 destinée à un dispositif de soudage par résistance selon l'une quelconque des revendications 1 à 9, **caractérisée en ce que** la base de données est conservée dans un moyen de mémorisation (110) de la commande de soudage (10).

14. Base de données selon l'une quelconque des revendications 10 à 12 destinée à un dispositif de soudage par résistance selon l'une quelconque des revendications 1 à 9, **caractérisée en ce que** la base de données est conservée sur un serveur auquel accède la commande de soudage (10).

15. Procédé de fonctionnement d'un dispositif de soudage par résistance selon l'une quelconque des revendications 1 à 9, comprenant une base de données selon l'une quelconque des revendications 10 à 14, comportant les étapes suivantes :
• lecture (300), par le dispositif d'association (130), d'un point à souder actuel dans une liste de points à souder,
• lecture (310a), par le dispositif d'association (130), d'une première courbe de valeurs de consigne dans un ensemble de données de la base de données, lequel est associé au point à souder actuel,
• association (320a), par le dispositif d'association (130), de la première courbe de valeurs de consigne au premier régulateur (150), et
• régulation (370), par le premier régulateur (150), de la variation dans le temps d'un courant électrique conformément à la première courbe de valeurs de consigne, **caractérisé en ce que**,
avant l'étape de
• régulation (370) de la variation dans le temps du courant électrique,
les étapes suivantes :
• lecture (310b), par le dispositif de paramétrage (140), d'au moins une première valeur dans l'ensemble de données,
• paramétrage (320b), par le dispositif de paramétrage (140), d'au moins un premier paramètre de régulation du premier régulateur (150) avec la première valeur,
sont exécutées.

16. Procédé selon la revendication 15 destiné au fonctionnement d'un dispositif de soudage par résistance selon l'une quelconque des revendications 4 à 9,
dans lequel, avant l'étape de
• régulation (370) de la variation dans le temps du courant électrique,
les étapes suivantes :
• lecture (330a), par le dispositif d'association (130), d'au moins une première courbe de référence dans l'ensemble de données, et
• association (340a), par le dispositif d'association (130), de la première courbe de référence au deuxième régulateur (160),
sont exécutées et dans lequel, pendant l'étape de
• régulation (370) de la variation dans le temps du courant électrique,
les étapes suivantes :
• détection (370), au moyen du dispositif de détection (120), de la variation dans le temps d'un courant, d'une tension, d'une force et/ou d'une position, et
• correction (370), par le deuxième régulateur (160), au moyen d'au moins un premier paramètre de correction, de la courbe de valeurs de consigne du premier régulateur (150) sur la base des écarts entre la courbe de référence et la variation dans le temps, détectée par le dispositif de détection (120), du courant, de la tension, de la force et/ou de la position
sont exécutées,
**caractérisé en ce que**,
avant l'étape de
• régulation (370) de la variation dans le temps du courant électrique,
les étapes suivantes :
• lecture (330b), par le dispositif d'association (130), d'au moins une deuxième valeur dans l'ensemble de données,
• paramétrage (340b), par le dispositif de paramétrage (140), avec la deuxième valeur, d'au moins un premier paramètre de correction du deuxième régulateur (160), sont exécutées.

17. Procédé selon la revendication 15 ou la revendication 16 pour faire fonctionner un dispositif de soudage par résistance selon l'une quelconque des revendications 7 à 9 dans lequel, avant l'étape de
• régulation (370) de la variation dans le temps du courant électrique,
les étapes suivantes :
• lecture (350a), par le dispositif d'association (130), d'une deuxième courbe de valeurs de consigne dans l'ensemble de données,
• association (360a), par le dispositif d'association (130), de la deuxième courbe de valeurs de consigne au troisième régulateur (170),
sont exécutées et dans lequel, pendant l'étape de
• régulation (370) de la variation dans le temps du courant électrique,
une étape de
• régulation (370), par le troisième régulateur (170), d'une variation dans le temps d'une force ou d'un couple d'entraînement de l'outil de soudage au moyen d'au moins un deuxième paramètre de régulation,
est exécutée,
**caractérisé en ce que**,
avant l'étape de
• régulation (370) d'une variation dans le temps d'une force ou d'un couple de rotation,
les étapes suivantes :
• lecture (350b), par le dispositif d'association (130), d'au moins une troisième valeur dans l'ensemble de données,
• paramétrage (360b), par le dispositif de paramétrage (140), avec la troisième valeur, d'au moins un deuxième paramètre de régulation du troisième régulateur (170), sont exécutées.

18. Programme d'ordinateur amenant un dispositif de soudage par résistance (1) selon l'une quelconque des revendications 1 à 9 à mettre en œuvre un procédé selon l'une quelconque des revendications 15 à 17, lorsqu'il est exécuté sur la commande de soudage (10) du dispositif de soudage par résistance (1).

19. Support de stockage lisible par machine sur lequel est stocké un programme d'ordinateur selon la revendication 18.

20. Ensemble de données destiné à être utilisé avec une commande de soudage (10) selon l'une quelconque des revendications 1 à 9 et/ou à être conservé dans une base de données selon l'une quelconque des revendications 10 à 14 d'une commande de soudage (10), présentant une structure comportant :
• une clé primaire (tblBDK:ID) permettant d'associer l'ensemble de données à un point de soudage dans une liste de points de soudage (tblPunkte), représentée notamment par un identifiant spécifique d'une combinaison tôle/épaisseur (ID_BDK),
• une courbe de valeurs de consigne (tblSoll:Soll) destinée à être appliquée à au moins un régulateur de courant (150) de la commande de soudage (10), et
• au moins une valeur supplémentaire (tblStrom:K_{P}, tblStrom:T_{N}, tblProzess:I_{P}, tblProzess:I_{T}, tblProzess:I_{G}), déterminée pour le paramétrage d'un régulateur de courant (150) de la commande de soudage (10) et/ou déterminée pour le paramétrage d'un régulateur de processus (160) de la commande de soudage (10).
